# EUROPÄISCHE PATENTSCHRIFT

(11) **EP 2 079 539 B1**
(45) Veröffentlichungstag und Bekanntmachung des Hinweises auf die Patenterteilung: **12.09.2012**
(21) Anmeldenummer: 07819127.7
(22) Anmeldetag: 18.10.2007
(51) Int. Cl.: B01D 3/00, C12P 7/06

(54) **ANLAGE ZUM ABTRENNEN VON ETHANOL AUS FERMENTIERTER MAISCHE**
INSTALLATION FOR THE SEPARATION OF ETHANOL FROM FERMENTED MASH
INSTALLATION POUR SÉPARER L'ÉTHANOL DU MOÛT FERMENTÉ

(30) Priorität: 18.10.2006 DE 102006049174
(43) Veröffentlichungstag der Anmeldung: 22.07.2009
(73) Patentinhaber: GEA Wiegand GmbH, 76275 Ettlingen (DE)
(72) Erfinder: BETHGE, Daniel, 2620 Neunkirchen (AT)
(74) Vertreter: Liska, Horst
(86) Internationale Anmeldenummer: PCT/EP2007/009062
(87) Internationale Veröffentlichungsnummer: WO 2008/046635

(56) Entgegenhaltungen:
- EP-A- 0 185 010
- WO-A-2004/038031
- DE-A1- 3 704 407

## Beschreibung

Die Erfindung betrifft eine Anlage zum Abtrennen von Ethanol aus fermentierter Maische.

Bei großtechnischer Herstellung von Alkohol, insbesondere konzentriertem Ethanol, wird das Ethanol in einer so genannten Maischekolonne aus der in einem vorgelagerten Gärprozess zugeführten Fermentationsbrühe durch Erhitzen ausgetrieben. Während der mit Ethanol angereicherte Produktstrom die Maischekolonne als Kopfbrüden verlässt, fällt die mit den Feststoffen der Fermentationsbrühe angereicherte, alkoholfreie Schlempe im Sumpf der Maischekolonne an.

Es ist bekannt die Maischekolonne mit Frischdampf direkt zu beheizen. Allerdings erhöht der Frischdampf den Wasseranteil in dem Prozess. Es ist deshalb auch üblich, die zum Austreiben des Alkohols benötigte Wärmeenergie über die im Sumpf sich sammelnden Schlempe mittels eines als Zwangsumlaufverdampfer ausgebildeten Reboilers einzubringen und hierbei den Verdampfer, über den die Schlempe im Kreislauf geführt wird, durch Frischdampf oder auch Produktbrüden einer anderen Stufe des Alkoholherstellungsprozesses zu heizen. Beispiele solcher Zwangsumlaufverdampfer sind aus WO 2004/038031 und DE 30 37 736 C2 bekannt.

Es hat sich allerdings herausgestellt, dass die Nutzung eines Zwangsumlaufverdampfers zum Beheizen der Maischekolonne die Betriebsbedingungen der Kolonne einschränkt. Auf der einen Seite darf die Temperatur der über den Zwangsumlaufverdampfer geführten Schlempe aus Viskositätsgründen nicht zu niedrig sein. Auf der anderen Seite lagern sich bei zu hoher Temperatur Schlempebestandteile an den Wänden der Anlage und so insbesondere des Zwangsumlaufverdampfers an. Dies erschwert die Energieintegration der Maischekolonne in den Energiehaushalt der Alkoholherstellungsanlage.

Aus EP-A-0185010 ist es bekannt die in einer Destillationskolonne anfallende Schlempe in eine Dünnsaftfraktion un eine Feststopffraktion zu trennen. Die dünnsaftfraktion wird in einem verdampfer aufkonzentriert.

Es ist Aufgabe der Erfindung eine Anlage zum Abtrennen von ethanol aus fermentierter Maische zu schaffen, deren Energiebedarf sich besser als bisher in den Energiehaushalt einer Gesamtanlage zur Alkoholherstellung integrieren lässt. Insbesondere soll die Energie auf einem niedrigeren Temperaturniveau als bisher zugeführt werden können.

Die erfindungsgemäße Lösung der vorstehenden Aufgabe geht aus von einer Anlage zum Abtrennen von Ethanol aus fermentierter Maische, welche umfasst:
- eine Maischekolonne mit einem Einlass für fermentierte Maische und mit einem Auslass für Ethanolbrüden im Bereich des Kolonnenkopfs, und
- einen fremdbeheizten, an den Sumpfbereich der Maischekolonne angeschlossenen Reboiler für die Wärmezufuhr zur Maischekolonne und ist dadurch gekennzeichnet, dass die in der Maischekolonne anfallende Schlempe einer die Schlempe in eine Feststofffraktion und eine Dünnsaftfraktion trennenden Trennvorrichtung zuführbar ist, und dass der Reboiler als Fallstromverdampfer ausgebildet ist, der zumindest einen Teil der Dünnsaftfraktion eindampft und die eingedampfte Dünnsaftfraktion oder/und den beim Eindampfen entstehenden Brüden dem Sumpfbereich der Maischekolonne zuführt.

Bei Verwendung eines herkömmlichen Zwangsumlaufverdampfers muss die im Kreislauf geführte Schlempe überhitzt werden und dementsprechend muss das zur Fremdbeheizung des Reboilers beispielsweise in Form von Brüden einer anderen Prozessstufe zuzuführende Medium auf einem vergleichsweise hohen Temperaturniveau zugeführt werden. Die Überhitzung wird als notwendig angesehen, um eine Entspannungsverdampfung in der Maischekolonne zu erreichen, was die Neigung zur Bildung von Ablagerungen im Reboiler mindert. Abgesehen von dem bereits erwähnten Zwang zur Überhitzung der Schlempe sind für den Zwangsumlauf vergleichsweise starke Pumpen erforderlich, die zu einer turbulenten Strömung im Reboiler führen.

Im Unterschied zum Stand der Technik wird im Rahmen der Erfindung als Reboiler ein Fallfilmverdampfer benutzt. Geeignete Fallfilmverdampfer sind beispielsweise aus DE 101 47 674 A1, DE 1 519 714 und CH 510 450 bekannt. Unter einem Fallfilmverdampfer soll auch ein Fallstromverdampfer verstanden werden. Wesentlich für solche Verdampfer ist, dass die Verdampfung anders als bei bisherigen Zwangsumlaufverdampfern nicht in der Maischekolonne erfolgt, sondern direkt in dem Reboiler. Das Produkt muss nicht für die Entspannungsverdampfung in der Maischekolonne überhitzt werden und dementsprechend genügt eine vergleichsweise geringe Temperaturdifferenz zwischen der Heizseite und der Produktseite des Fallfilmverdampfers. Da der Fallfilmverdampfer nicht der mit Feststoff beladenen Schlempe ausgesetzt ist, sondern lediglich der im Wesentlichen feststofffreien Dünnsaftfraktion der Schlempe, wird die Verschmutzung des an sich verschmutzungsempfindlichen Fallfilmverdampfers vermieden. Die in einer Trennvorrichtung aus der Schlempe abgetrennte Feststofffraktion wird aus dem Prozess entfernt. Der in dem Fallfilmverdampfer erzeugte Brüden wird direkt in die Maischekolonne zur Beheizung eingespeist. Auf Grund der vergleichsweise geringen Temperaturdifferenz zwischen der Heizseite und der Produktseite des Fallfilmverdampfers lässt sich ein solcher Reboiler leichter in einen Gesamtprozess integrieren. Beispielsweise kann der Fallfilmverdampfer mit Kopfbrüden einer der Maischekolonne nachfolgenden Rektifikationskolonne geheizt werden.

Die der Erfindung zu Grunde liegende Idee aus der in der Maischekolonne anfallenden Schlempe die Feststofffraktion abzutrennen und lediglich die Dünnsaftfraktion dem Fallfilmverdampfer für die Erzeugung eines die Maischekolonne beheizenden Brüdens zuzuführen, lässt sich auf unterschiedliche Weise realisieren. In einer ersten Variante kann die Trennvorrichtung hierzu mit einem oberhalb des Sumpfbereichs angeordneten Schlempeauslass der Maischekolonne verbunden sein, wobei der Fallfilmverdampfer an einen durch den Sumpfbereich der Maischekolonne führenden Zwangsumlaufkreis angeschlossen ist, dem zumindest ein Teil der Dünnsaftfraktion der Trennvorrichtung zuführbar ist. Der Schlempeauslass kann beispielsweise an dem untersten Boden des den Alkohol austreibenden Abschnitts der Maischekolonne vorgesehen sein, während der eine Umwälzpumpe enthaltene Zwangsumlaufkreis von einem zu unterst liegenden Sumpfauslass der Maischekolonne ausgeht. Zweckmäßigerweise wird die Dünnsaftfraktion zwischen dem Sumpfauslass und der Umwälzpumpe in den Zwangsumlaufkreis eingespeist.

Die Trennvorrichtung ist zumeist nicht in der Lage den Feststoffanteil der Schlempe vollständig abzutrennen. So enthält der in den Sumpf der Maischekolonne zurückgeführte Ablauf des Fallfilmverdampfers vielfach noch Restanteile nicht abgetrennter und/oder gelöster Feststoffe. Zweckmäßigerweise wird deshalb ein Teil der in dem Zwangsumlaufkreis umlaufenden Dünnsaftfraktion einer Schlempe-Eindampfvorrichtung zugeführt. Diese Vorrichtung kann eine Zentrifuge oder/und wenigstens einen weiteren Verdampfer, beispielsweise Fallstromverdampfer umfassen, um die verbleibenden Feststoffanteile einzudicken.

Bei einer anderen Variante kann die Trennvorrichtung mit einem Schlempeauslass in dem Sumpfbereich der Maischekolonne verbunden sein, wobei zumindest ein Teil der Dünnsaftfraktion einem durch den Fallfilmverdampfer führenden Zwangsumlaufkreis zuführbar ist. Zumindest ein Teil der in dem Zwangsumlaufkreis umlaufenden Dünnsaftfraktion ist in den Sumpfbereich der Maischekolonne zurückführbar. Wie auch bei der erstgenannten Variante kann der zurückführbare Anteil der Dünnsaftfraktion zumindest teilweise auch in Brüdenform vorliegen. Auch bei der zweiten Variante kann ein Teil der in dem Zwangsumlaufkreis umlaufenden Dünnsaftfraktion einer Schlempe-Eindampfvorrichtung zugeführt werden, um Feststoffe der Schlempe einer gesonderten Verwertung, beispielsweise als Tierfutter oder dergleichen, zuführen zu können.

Die Trennvorrichtung kann herkömmlich ausgebildet sein, beispielsweise als Absetzbehälter oder als Falter. Zweckmäßigerweise handelt es sich um eine Zentrifuge oder einen Dekanter.

Im Folgenden werden Ausführungsbeispiele der Erfindung anhand einer Zeichnung näher erläutert. Hierbei zeigt:
- Fig. 1: ein schematisch dargestelltes Schema einer Anlage zum Abtrennen von Ethanol aus fermentierter Maische und
- Fig. 2: eine Variante der Anlage.

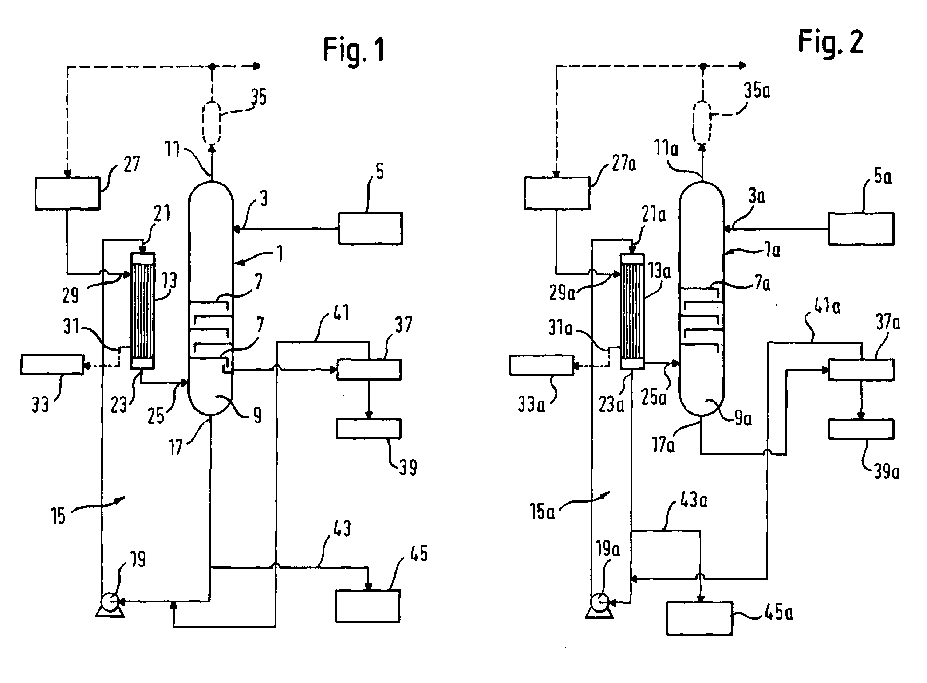

Die Anlage gemäß Fig. 1 umfasst eine herkömmliche Maischekolonne 1, der oberhalb ihres Alkohol-Austreibbereichs an einem Einlass 3 aus einem bei 5 angedeuteten Fermentierungsprozess fermentierte, d. h. abgeschlossen vergorene Maische, in Form einer Fermentationsbrühe zuführbar ist. Die Maischekolonne 1 enthält eine Vielzahl übereinander liegender Böden 7 zur Vergrößerung der ethanolaustreibenden Flüssigkeitsoberfläche oberhalb eines Kolonnensumpfs 9, über den die Maischekolonne 1 in nachfolgend noch näher erläuterter Weise beheizt wird. An einem Kopfauslass 11 der Maischekolonne 1 wird der nach oben aufsteigende Alkoholbrüden abgezogen.

Für die Beheizung der Maischekolonne 1 ist ein Reboiler 13 in Form eines Fallfilmverdampfers vorgesehen, der über einen durch den Sumpf 9 der Maischekolonne 1 führenden Zwangsumlaufkreis 15 den Sumpfbereich beheizt. Der Zwangsumlaufkreis 15 führt von einem zu unterst gelegenen Sumpfauslass 17 über eine Umwälzpumpe 19 zum oben liegenden Produkteinlass 21 des Fallfilmverdampfers 13. Mit seinem Kondensatauslass 23 ist der Fallfilmverdampfer 13 an einen oberhalb des Sumpfauslasses 17 gelegenen Einlass 25 des Sumpfs 9 der Maischekolonne 1 angeschlossen. Aus einer Wärmequelle 27 wird dem Fallfilmverdampfer 13 bei 29 Heizmedium, beispielsweise in Form von Brüden einer anderen Prozessstufe der Alkoholherstellungsanlage, zugeführt und bei 31 nach Abarbeitung zumindest eines Teils der Wärmeenergie, z. B. als Kondensat, wieder abgeführt. Das Kondensat kann einer weiteren Wärmerückgewinnungsstufe 33 zugeführt werden. Als Wärmequelle kann, wie dies in Fig. 1 bei 35 angedeutet ist, eine die Alkoholkonzentration erhöhende, an den Kopfauslass 11 angeschlossene Rektifikationskolonne dienen, deren Kopfbrüden den Fallfilmverdampfer 13 zur Beheizung zugeführt wird.

Die in der Maischekolonne 1 anfallende, alkoholfreie Schlempe wird im Bereich des untersten Bodens 7 abgezogen und einem Dekanter 37 zugeführt, der die Feststofffraktion der Schlempe weitestgehend abtrennt. Der hierbei entstehende Dekanter-Kuchen wird aus dem Prozess entfernt und bei 39 einer Weiterverarbeitung, beispielsweise zu Tierfutter oder dergleichen, zugeführt. Die in dem Dekanter 37 bei 41 anfallende Dünnsaftfraktion wird in den Zwangsumlaufkreis 15 eingeführt, hier zwischen dem Sumpfauslass 17 und der Umwälzpumpe 19. Der Fallfilmverdampfer 13 erwärmt damit nicht unmittelbar die Feststoffe enthaltende Schlempe, sondern lediglich deren weitgehend von Feststoffen befreite Dünnsaftfraktion. Dies mindert die Verschmutzungsgefahr des Fallfilmverdampfers 13 erheblich. In dem Sumpfablaufprodukt eventuell noch enthaltene, nicht abgetrennte oder gelöste Feststoffe werden bei 43 aus dem Zwangsumlaufkreis 15 abgezogen und einer herkömmlichen Schlempe-Eindampfstufe 45 zugeführt. Die Schlempe-Eindampfstufe 45 kann eine nicht näher dargestellte Zentrifuge und/oder wenigstens einen Verdampfer, beispielsweise einen Fallstromverdampfer, umfassen. Zweckmäßigerweise wird die Dünnsaftfraktion stromabwärts der Abzugsstelle 43 in den Zwangsumlaufkreis 15 eingespeist.

Die Maischekolonne 1 wird bei Unterdruck betrieben. Üblicherweise herrscht im Kopfbereich der Maischekolonne 1 ein Druck von etwa 200-300 Millibar und im Sumpfbereich ein Druck von etwa 400 bis 500 Millibar. Der Druck im Arbeitsraum des Fallfilmverdampfers 13 beträgt etwa 500 Millibar. Die Verdampfung der Dünnschichtfraktion findet im Fallfilmverdampfer 13 statt und dementsprechend kann die am Produktausgang 23 anfallende erwärmte, eingedampfte Dünnsaftfraktion einschließlich des dort vorhandenen Brüdens direkt zur Beheizung des Sumpfs 9 der Maischekolonne 1 genutzt werden. Da die Dünnsaftfraktion weitgehend feststofffrei ist, ist die Gefahr gering, dass der Fallfilmverdampfer 13 durch Feststoffe verschmutzt. Der Vorteil des Fallfilmverdampfers 13, dass die Temperatur des an seinem Heizeingang 29 zugeführten Heizmediums nur wenig größer, beispielsweise 5 °C höher als die Siedetemperatur des zu verdampfenden Produkts, hier der Dünnsaftfraktion, sein muss, erleichtert die Einbindung der Anlage in die Energiebilanz der gesamten Alkoholherstellungsanlage. Die zum Beheizen der Maischekolonne 1 erforderliche Energiemenge kann damit auf einem niedrigeren Temperaturniveau als bisher bereitgestellt werden.

Die in Fig. 2 dargestellte Anlage zum Abtrennen von Ethanol aus fermentierter Maische unterscheidet sich von der Anlage der Fig. 1 lediglich durch den Ort des Schlempeabzugs aus der Maischekolonne und die Gestaltung des Zwangsumlaufkreises. Gleich wirkende Komponenten sind mit den Bezugszahlen aus Fig. 1 bezeichnet und zur Unterscheidung mit dem Buchstaben a versehen. Zur Erläuterung des Aufbaus und der Wirkungsweise sowie eventueller Varianten wird auf die Beschreibung der Fig. 1 Bezug genommen.

Im Unterschied zur Anlage der Fig. 1 ist der die Dünnsaftfraktion des Dekanters 37a aufnehmende Zwangsumlaufkreis 15a nicht durch den Sumpf 9a der Maischekolonne 1 a geführt. Der Dekanter 37a ist an den Sumpfauslass 17a im untersten Bereich des Sumpfs 9a der Maischekolonne 1a angeschlossen und übernimmt die Schlempe unmittelbar aus dem Sumpf 9a. Die bei 43a anfallende Dünnsaftfraktion des Dekanters 37a wird zwischen dem die eingedampfte Dünnsaftfraktion abgebenden Produktausgang 23a des Fallfilmverdampfers 13a und der Umwälzpumpe 19a in den Zwangsumlaufkreis 15a eingeführt. Ein Teil der eingedampften Dünnsaftfraktion und insbesondere der in dem Fallfilmverdampfer 13a anfallende Brüden wird über den Einlass 25a dem Sumpf 9a direkt zur Beheizung zugeführt. Es versteht sich, dass gegebenenfalls für die direkte Beheizung auch ausschließlich Brüden in den Sumpf 9a eingeleitet werden kann. In der Dünnsaftfraktion am Ausgang 23a des Fallfilmverdampfers 13a eventuell noch vorhandene Feststoffe können wiederum in einer Schlempe-Eindampfstufe 45a abgetrennt werden. Die mit der Anlage gemäß Fig. 1 erzielten Vorteile ergeben sich auch bei der Anlage gemäß Fig. 2 mit dem zusätzlichen Vorteil der Trennung des Zwangsumlaufkreises 15a von der Maischekolonne 1 a.

## Patentansprüche

1. Anlage zum Abtrennen von Ethanol aus fermentierter Maische umfassend:
- eine Ethanol aus fermentierter Maische austreibende Maischekolonne (1) mit einem Einlass (3) für fermentierte Maische und mit einem Auslass (11) für Ethanolbrüden im Bereich des Kolonnenkopfs,
- einen fremdbeheizten, an den Sumpfbereich (9) der Maischekolonne (1) angeschlossenen Reboiler (13) für die Wärmezufuhr zur Maischekolonne (1),
wobei die in der Maischekolonne (1) anfallende Schlempe einer die Schlempe in eine Feststofffraktion und eine Dünnsaftfraktion trennende Trennvorrichtung (37) zuführbar ist,
**dadurch gekennzeichnet, dass**
der Reboiler als Fallstromverdampfer (13) ausgebildet ist, der zumindest einen Teil der Dünnsaftfraktion eindampft und die eingedampfte Dünnsaftfraktion oder/und den beim Eindampfen entstehenden Brüden dem Sumpfbereich (9) der Maischekolonne (1) zuführt und dass
der Maischekolonne (1) eine die Ethanolkonzentration der Ethanolbrüden erhöhende Rektifikationskolonne (35) nachgeschaltet ist, deren Kopfbrüden dem Fallfilmverdampfer (13) zu dessen Beheizung zuführbar ist.

2. Anlage zum Abtrennen von Ethanol aus fermentierter Maische nach Anspruch 1, **dadurch gekennzeichnet, dass**
die Trennvorrichtung (37) mit einem oberhalb des Sumpfbereichs (9) angeordneten Schlempeauslass der Maischekolonne (1) verbunden ist und der Fallfilmverdampfer (13) an einen durch den Sumpfbereich (9) der Maischekolonne (1) führenden Zwangsumlaufkreis (15) angeschlossen ist, dem zumindest ein Teil der Dünnsaftfraktion der Trennvorrichtung (37) zuführbar ist.

3. Anlage zum Abtrennen von Ethanol aus fermentierter Maische nach Anspruch 1, **dadurch gekennzeichnet, dass**
die Trennvorrichtung (37a) mit einem Schlempeauslass (17a) in dem Sumpfbereich (9a) der Maischekolonne (1a) verbunden ist und zumindest ein Teil der Dünnsaftfraktion an einen durch den Fallfilmverdampfer (13a) führenden Zwangsumlaufkreis (15a) zuführbar ist,
und dass zumindest ein Teil der in dem Zwangsumlaufkreis (15a) umlaufenden Dünnsaftfraktion oder/und Brüden des Fallfilmverdampfers (13a) in den Sumpfbereich (9a) der Maischekolonne (1a) zurückführbar ist.

4. Anlage zum Abtrennen von Ethanol aus fermentierter Maische nach Anspruch 2 oder 3, **dadurch gekennzeichnet, dass** ein Teil der in dem Zwangsumlaufkreis (15, 15a) umlaufenden Dünnsaftfraktion einer Schlempe-Eindampfvorrichtung (45; 45a) zuführbar ist.

5. Anlage zum Abtrennen von Ethanol aus fermentierter Maische nach einem der Ansprüche 1 bis 4, **dadurch gekennzeichnet, dass** die Trennvorrichtung (37) als Dekanter ausgebildet ist.

6. Anlage zum Abtrennen von Ethanol aus fermentierter Maische nach einem der Ansprüche 1 bis 5, **dadurch gekennzeichnet, dass** die in der Maischekolonne (1) anfallende Schlempe der Trennvorrichtung (37) direkt zuführbar ist.

## Claims

1. Installation for the separation of ethanol from fermented mash, comprising:
- a mash column (1) driving ethanol out of fermented mash with an inlet (3) for fermented mash and an outlet (11) for ethanol vapour in the region of the column head,
- a reboiler (13) for supplying heat to the mash column (1), said reboiler being externally heated and being connected to the sump area (9) of the mash column (1),
- wherein the slop produced in the mash column (1) is fed to a separating device (37) separating the slop into a solids fraction and a thin juice fraction,
**characterised in that**
the reboiler (13) is configured as a falling film evaporator (13) which evaporates at least a portion of the thin juice fraction and feeds the evaporated thin juice fraction or/and vapour produced during the evaporation to the sump area (9) of the mash column (1) and **in that**
a rectification column (35) increasing the ethanol concentration of the ethanol vapour is connected downstream of the mash column (1), the head vapours of which can be fed to the falling film evaporator (13) for the heating thereof.

2. Installation for the separation of ethanol from fermented mash according to claim 1, **characterised in that**
the separating device (37) is connected to a slop outlet of the mash column (1) arranged above the sump area (9) and the falling film evaporator (13) is connected to a forced circulation circuit (15) leading through the sump area (9) of the mash column (1), to which forced circulation circuit a portion of the thin juice fraction of the separating device (37) can be fed.

3. Installation for the separation of ethanol from fermented mash according to claim 1, **characterised in that**
the separating device (37a) is connected to a slop outlet (17a) in the sump area (9a) of the mash column (1a) and
at least a portion of the thin juice fraction can be fed to a forced circulation circuit (15a) leading through the falling film evaporator (13a),
and **in that** at least a portion of the thin juice fraction and/or vapour of the falling film evaporator (13a) circulating in the forced circulation circuit (15a) can be fed back to the sump area (9a) of the mash column (1a).

4. Installation for the separation of ethanol from fermented mash according to claim 2 or 3, **characterised in that** a portion of the thin juice fraction circulating in the forced circulation circuit (15, 15a) can be fed to a slop evaporating device (45; 45a).

5. Installation for the separation of ethanol from fermented mash according to any one of claims 1 to 4, **characterised in that** the separating device (37) is configured as a decanter.

6. Installation for the separation of ethanol from fermented mash according to any one of claims 1 to 5, **characterised in that** the slop produced in the mash column (1) can be fed directly to the separating device (37).

## Revendications

1. Installation pour séparer l'éthanol du moût fermenté, comprenant:
- une colonne (1) de distillation du moût extrayant l'éthanol du moût fermenté, avec une entrée (3) pour le moût fermenté et avec une sortie (11) pour les vapeurs d'éthanol dans la région de la tête de la colonne,
- un rebouilleur (13) à chauffage extérieur, raccordé à la région du fond (9) de la colonne de distillation du moût (1), pour la fourniture de chaleur à la colonne de distillation du moût (1),
dans laquelle la drêche produite dans la colonne de distillation du moût (1) peut être envoyée à un dispositif de séparation (37) séparant la drêche en une fraction de matière solide et une fraction de jus léger,
**caractérisée en ce que**
le rebouilleur est réalisé sous la forme d'un évaporateur à film tombant (13), qui évapore au moins une partie de la fraction de jus léger et qui envoie la fraction de jus léger évaporée et/ou les vapeurs produites lors de l'évaporation à la région du fond (9) de la colonne de distillation du moût (1), et **en ce qu'**une colonne de rectification (35) augmentant la concentration d'éthanol des vapeurs d'éthanol est installée après la colonne de distillation du moût (1), et dont les vapeurs de tête peuvent être envoyées à l'évaporateur à film tombant (13) en vue de son chauffage.

2. Installation pour séparer l'éthanol du moût fermenté selon la revendication 1, **caractérisée en ce que** le dispositif de séparation (37) est raccordé à une sortie de drêche de la colonne de distillation du moût (1) disposée au-dessus de la région du fond (9) et l'évaporateur à film tombant (13) est raccordé à un circuit à circulation forcée (15) conduisant à travers la région du fond (9) de la colonne de distillation du moût (1) et auquel au moins une partie de la fraction de jus léger du dispositif de séparation (37) peut être envoyée.

3. Installation pour séparer l'éthanol du moût fermenté selon la revendication 1, **caractérisée en ce que** le dispositif de séparation (37a) est raccordé à une sortie de drêche (17a) dans la région du fond (9a) de la colonne de distillation du moût (la) et au moins une partie de la fraction de jus léger peut être envoyée à un circuit à circulation forcée (15a) conduisant à travers l'évaporateur à film tombant (13a) et **en ce qu'**au moins une partie de la fraction de jus léger et/ou des vapeurs de l'évaporateur à film tombant (13a) circulant dans le circuit à circulation forcée (15a) peut être renvoyée dans la région du fond (9a) de la colonne de distillation du moût (1a).

4. Installation pour séparer l'éthanol du moût fermenté selon la revendication 2 ou 3, **caractérisée en ce qu'**une partie de la fraction de jus léger circulant dans le circuit à circulation forcée (15, 15a) peut être envoyée à un dispositif d'évaporation de drêche (45; 45a).

5. Installation pour séparer l'éthanol du moût fermenté selon l'une quelconque des revendications 1 à 4, **caractérisée en ce que** le dispositif de séparation (37) est réalisé sous la forme d'un décanteur.

6. Installation pour séparer l'éthanol du moût fermenté selon l'une quelconque des revendications 1 à 5, **caractérisée en ce que** la drêche produite dans la colonne de distillation du moût (1) peut être envoyée directement au dispositif de séparation (37).
